# EUROPEAN PATENT APPLICATION

(11) **EP 2 189 914 A1**
(43) Date of publication of application: **26.05.2010**
(21) Application number: 08291098.5
(22) Date of filing: 21.11.2008
(51) Int. Cl.: G06F 17/30

(54) **Technique for customizing content**

(71) Applicant: Thomson Licensing, 92443 Issy-les-Moulineaux Cedex (FR)
(72) Inventor: Xu, Jun, Beijing 100085 (CN); Li, Jun, Beijing 100085 (CN); Xie, Kai, Beijing 100086 (CN)
(74) Representative: Ruellan-Lemonnier, Brigitte

(57) **Abstract**

Content can be advantageously customized by use of an accompanying rich media file that characterizes segments in the content file. To perform such customization, the rich media file undergoes parsing (e.g., examination) to identify a location for an overlay in the least one segment of the content file. Thereafter, an overlay is inserted into the at least one content segment. In practice, the overlay is inserted to block objectionable material in the content segment, but the overlay can be inserted to add material, such as to insert an advertisement or a sub-title for example. Inserting the overlay can include physically overlaying a cover layer onto one or more frames of the content segment to add information or block objectionable material in the content segment.

## Description

### TECHNICAL FIELD

This invention relates generally to a technique for customizing content, which can include audiovisual programs (movies or television program), computer programs such as games, and data.

### BACKGROUND ART

Advances in transmission now allow users to receive content via a variety of transport modes, such as satellite, Internet, cable or terrestrial broadcast. The content itself can take various forms including audiovisual programs, such as movies or television, computer programs, or data, all of which can undergo playback on a client device, such as a computer, television set, personal data assistant (PDA) or other type of mechanism that can deliver video as well as audio.

A typical provider of content serves many subscribers with varying tastes. For that reason, content providers maintain a large repertoire of content to meet subscriber demand. In some instances, not all subscribers will want the same versions of a given piece of content. For example, certain pieces of content can contain material considered by some to be objectionable, such as violence, adult language and/or nudity, which some viewers would consider sufficiently distasteful to warrant avoiding viewing. In contrast, other subscribers might not consider such material objectionable.

Presently, content providers usually provide a warning at the outset of presentation of a given piece of content regarding its nature so that those who might be offended will have advanced notice and can decide whether to view the content. This approach works well if the subscriber commences viewing of the content not later than display of the warning. However, simply providing a warning does not eliminate the problem of subjecting sensitive viewers to objectionable material. For example, consider the possibility that a subscriber commences viewing of the content after the display of the warning. In the absence of viewing the warning, a subscriber will not know whether the content contains material deemed objectionable. The content provider could provide a warning for continuous display during viewing, but most subscribers likely would consider such a warning distracting. Moreover, the display of a warning likely will not deter a child from viewing content deemed inappropriate by the child's parent or guardian.

Another solution to the problem of avoiding viewing of objectionable material would be for the content provider to maintain both an original copy and an altered version having the objectionable material blocked, removed, or otherwise obscured from viewing. However, maintaining duplicate copies of the same content doubles the storage requirement. Alternatively, the content provider could "screen" the content prior to transmission and remove or otherwise block objectionable material as part of the transmission process. Screening the content in the course of transmission to a subscriber imposes addition burden and cost on the content provider.

Thus, a need exists for a technique for customizing content that overcomes the aforementioned disadvantages.

### BRIEF SUMMARY OF THE INVENTION

Briefly, in accordance with an illustrative embodiment of the present principles, there is provided a method for customizing a content bundle including a content file and a rich media file characterizing each of a plurality of successive segments of the content file. The content file can include at least one of an audiovisual program, a computer program or data, or any combination thereof. The method commences by first parsing (e.g., examining) the rich media file to identify a location for an overlay in the least one segment of the content file. Thereafter, an overlay is inserted into the at least one content segment. In practice, the overlay is inserted to block objectionable material in the content segment, but the overlay can be inserted to add material, such as to insert an advertisement or a sub-title for example. Inserting the overlay can include physically overlaying a cover layer onto one or more frames of the content segment to add information or block objectionable material in the content segment. In the case where blocking is desired, the process of inserting an overlay can include changing one or more data elements in the content segment, for example, changing pixels in the video portion of an audiovisual file, and/or or bits in the audio portion to block the objectionable material.

### BRIEF DESCRIPTION OF THE DRAWINGS

FIGURE 1 depicts a block schematic diagram of an illustrative system for customizing content in accordance with the present principles;
FIGURE 2 depicts in flow chart form the steps of a process for parsing a rich media file accompanying a content file to identify objectionable material in at least one segment in the content file;
FIGURE 3 depicts in flow chart form the steps of a process for inserting an overlay into the content to block objectionable material upon its occurrence; and
FIGURE 4 depicts successive overlays, each blocking objectionable material in a corresponding segment of a content file.

### DETAILED DESCRIPTION

Customization of content in a content file advantageously occurs in accordance with the present principles by making use of an accompanying rich media file that identifies the occurrence and location of objectionable material in segments of the content file to enable generation of overlays to block such material. By way of example, the content file can include one or more audiovisual programs (e.g., television programs or movies), computer programs (e.g., video games) and/or data (e.g., one or more JPEG files embodying pictures). The rich media file accompanying the content file includes information characterizing segments in the content file. In the illustrative embodiment, the rich media file includes information that identifies the position (e.g., location) and size of objectionable material in segments of the content file. Such objectionable material can include a scene or portion thereof containing violence, adult language, and/or sexual activity for example. The identification of the objectionable material by parsing the rich media text file enables creation and insertion of an overlay to block such objectionable material.

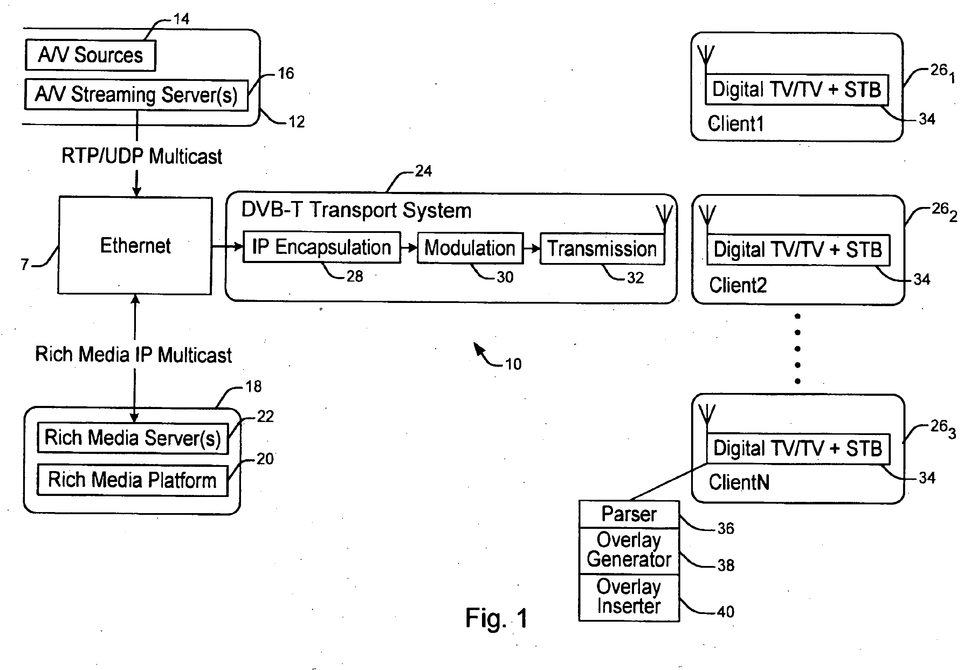

FIGURE 1 depicts a block schematic diagram of a system 10 for practicing the content customization technique of the present principles. The system 10 includes at least one content source 12 that can include at least one, and preferably, a plurality of sources of audiovisual programs supplied to one or more audiovisual program servers 16 that stream the content files onto a network 17, such as an Ethernet network. In addition to, or in place of the sources 14 of audiovisual content, the content source 12 could include one or more sources (not shown) of computer programs and/or data that supply one or more servers (not shown) in addition to, or in place of the servers 16.

In addition to the content source 12, the system 10 also includes a source 18 of rich media. The rich media source 18 includes at least one platform 20 that provides at least one rich media file corresponding to at least one content file, whether an audio-visual program, a computer program or data. As discussed above, the rich media file contains information, including, but not limited to metadata, for individual segments of a corresponding content file. For example, a rich media file for a corresponding audio-visual program such as a movie or a television program typically contains information associated with individual scenes and even individual frames within a scene in the audiovisual program. Among the information contained in the rich media file for segments of the content file is the position and size of objectionable material (if any) in each segment as well as the duration, typically measured by the length of time such objectionable material persists.

The rich media file(s) established by the rich media platform 20 undergo streaming by one or more rich media servers 22 onto the network 17 that carries these files along with the content files from the content source 12 to a transport system 24. In the illustrative embodiment of FIG. 1, the transport system 24 typically comprises a Direct Video Broadcast Transport system (DVB-T) for transmitting content bundles, comprising the combination of content files and corresponding rich media files, to one or more clients, such as clients 26₁, 26₂ and 26₃ for example. The DVB-T transport system 24 includes an Internet Protocol encapsulation block 28 that encapsulates the rich media file with its corresponding content file to create a content bundle, which then undergoes modulation by a modulation block 30. A transmission block 32 transmits modulated content bundles to the clients 26₁-26₃. The clients 26₁-26₃ each include a receiving apparatus 34, typically in the form of a digital television set, or the combination of television set and set top box. As described in detail hereinafter, the receiving device of each client serves to demodulate content bundles and parse (e.g., examine) the rich media file to identify to objectionable material (if any) and to create and insert an overlay to block such material. To that end, each receiving device includes a parser 36 for parsing the rich media file, an overlay generator 38 for generating a corresponding overlay, and an overlay inserter 40 for inserting the overlay. The elements 36-40 can comprise separate hardware and/or software elements or collectively can comprise a single hardware and/or software element.

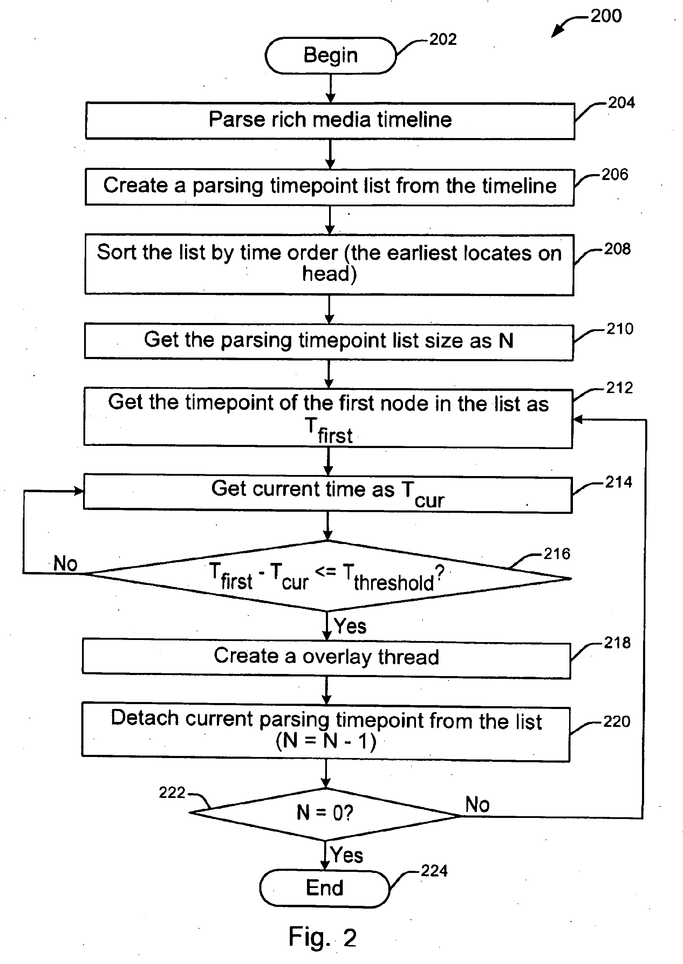

FIGURE 2 depicts in flow chart form the steps of a process 200 in accordance with an illustrative embodiment of the present principles for execution by the combination of elements 36-40 in the receiving device 34 of an individual client. As described below, execution of the process 200 serves to customize content, and more specifically, to generate and insert an overlay into a segment of a content file to block objectionable material. The process 200 commences upon execution of a "begin" step 202 at which time various process variables described in detail hereinafter undergo initialization. Step 204 follows next during which a time line within the rich media file during step 204 undergoes parsing (e.g., examination) to identify the time associated with the appearance of objectionable material during presentation of a given segment in a content file.

Step 206 undergoes execution following step 204. During step 206, recording of each time point associated the appearance of objectionable material occurs. Sorting of the stored list of time points occurs during execution of step 208. In some instances, segments of the content file might not necessarily undergo presentation in time order. For example, one or more content segments might repeat. Following sorting, the time points appear in time order, with the earliest time point appearing first. For ease of discussion, the term T_{first} represents the first time point.

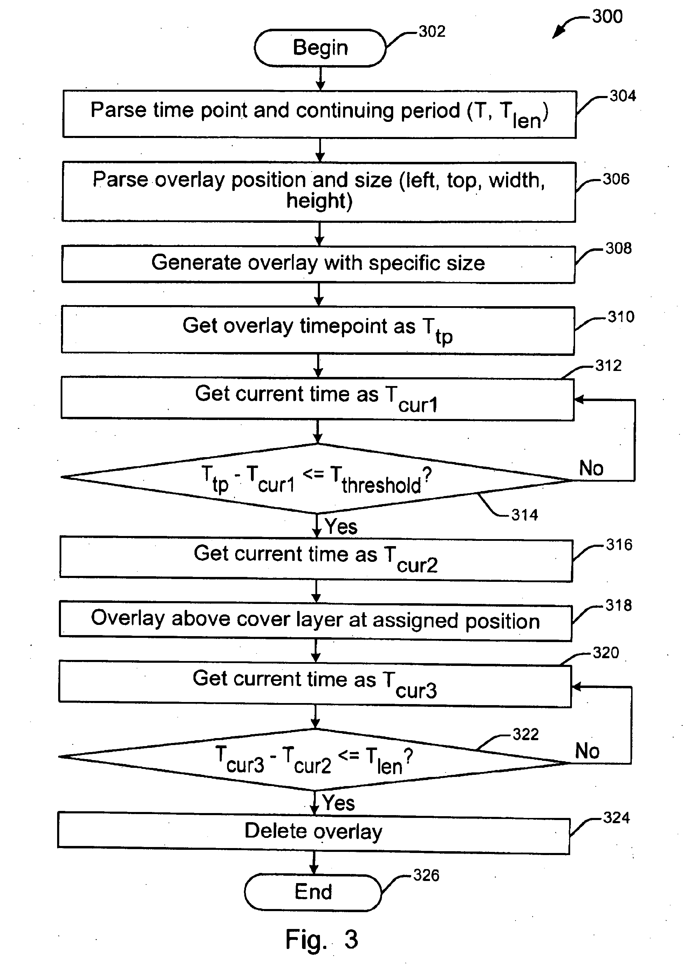

After sorting the list during step 208, the number of time points in the list (defined by the variable N) is determined during step 210. Thereafter, the first time point in the list undergoes selection during step 212. Thereafter, the current time (T_{cur}) is established during step 214. A check then occurs during step 216 whether the condition T_{first} - T_{cur} <= T_{threshold} is satisfied, e.g., whether the difference between the first time point (T_{first}) and the current time (T_{cur}) remains less than or equal to a threshold value (T_{threshold}). If not, steps 214 and 216 undergo repetition until such time as T_{first} - T_{cur} <= T_{threshold}. Once the condition in step 216 becomes satisfied, then the individual client device will create an overlay during step 218 in accordance with the process of FIG. 3 described hereinafter, to block the objectionable material in the content segment. Thereafter, step 220 undergoes execution and the current parsing point (that is, the time interval associated with appearance of the current instance of objectionable material in the content segment) is deleted from the lists of parsing points. In other words, the variable N is decremented by 1 so that N=N-1. A check then occurs during step 222 whether N=0, which occurs when no further parsing points remain (e.g., no instances of objection material remain). Should N not equal zero, then steps 212 through 222 undergo repetition. Upon determining that N equals zero and all content segments portions have undergone review for objectionable material, the process ends at step 224.

FIGURE 3 depicts in flow chart form an exemplary process 300 for creating the overlay generated during step 218 of FIG. 2. The process 300 begins upon execution of step 302 during which initialization of various process parameters occurs. Thereafter, step 304 undergoes execution to establish a time point T associated with the appearance of a current content segment and time length (T_{length}) for that segment. Next, step 306 undergoes execution to obtain the position (e.g., location) and size of the needed overlay. Such information is obtained by parsing (e.g., examining) the rich media file for information concerning the position and size of the objectionable material in the content segment. During step 308, the overlay is generated.

Generation of the overlay during step 308 can proceed in several different ways. For example, the overlay can take the form of a cover layer to overlie the objectionable material in the segment. In the case of objectionable material in the audio portion of the content segment, the overlay could take the form of a tone or combination of tones mixed with the audio portion of the content segment.

Alternatively, the generation of the overlay need not take the form of a cover layer (or in the case of audio, a separate tone or tones.) Rather, generation of the overlay, in accordance with one aspect of the present principles, could comprise the step of modifying data elements in the content segment. For example, objectionable material in the video portion of the content segment could be blocked by altering pixel values, which comprise the objectionable material. In the case of objectionable audio, either alteration or deletion of such audio could occur.

Following step 308, step 310 undergoes execution and the time point (T_{P}) that identifies the appearance in the content segment of objectionable material, thus corresponding to the location of the needed overlay insertion is determined. Next, during step 312, the current time (T_{cur1}) is established. Thereafter, step 314 undergoes execution during which a check occurs to determine whether the Tₜₚ-T_{cur1} <= T_{thnshold} remains unsatisfied which occurs while the difference between Tₜₚ and T_{cur1} exceeds a threshold value (T_{threshold}). As long as the condition remains unsatisfied, then following step 314, step 312 undergoes re-execution followed by re-execution of step 314. Once the condition Tₜₚ-T_{cur1} <= T_{threshold} becomes satisfied (e.g., the difference between Tₜₚ-T_{cur1} does not exceed T_{threshold}, then step 316 undergoes execution whereupon the current time is obtained and assigned to the variable T_{cur2}.

Thereafter, step 318 follows, whereupon the overlay created during step 308 is placed above a cover layer at the assigned position. The placement of the overlay during step 318 presumes the creation of a frame that will physically overlie a cover layer, that is all or part of a content frame. However, as discussed previously, the process of implementing an overlay can occur in other ways (such as by manipulating the content itself) to effectively block objectionable material from appearing in a content segment.

Step 320 undergoes execution following step 318 and whereupon the current time is obtained and assigned to the variable T_{cur3}. Thereafter, step 322 undergoes execution during which a check occurs to determine whether the condition T_{cur3} - T_{cur2} <= Tₗₑₙ remains unsatisfied which occurs while the difference between T_{cur3} and T_{cur2} exceeds the length of blocking interval Tₗₑₙ. As long as the condition remains unsatisfied, then steps 320 and 322 undergo repetition. Once the condition T_{cur3} - T_{cur2} <= Tₗₑₙ becomes satisfied, step 324 undergoes execution and the current overlay is deleted. Thereafter, the process ends at step 326.

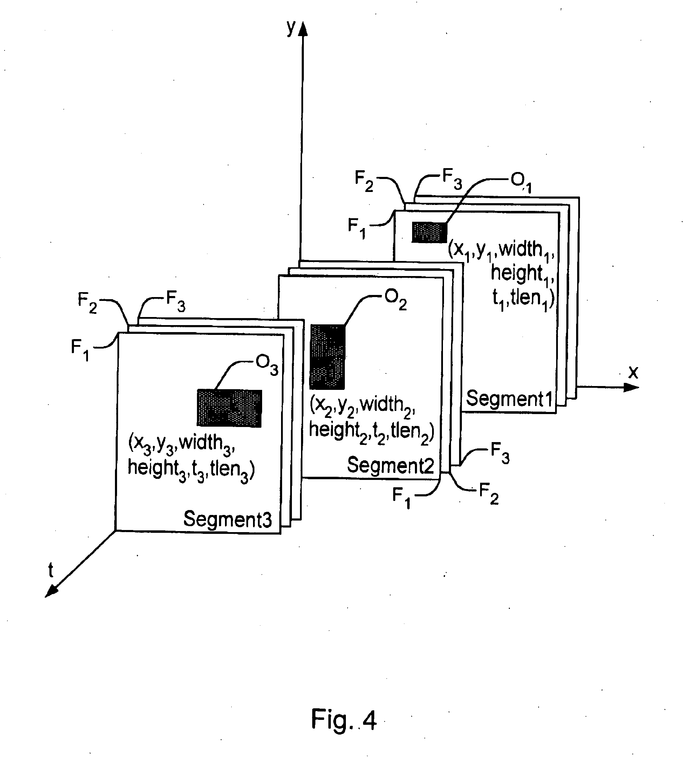

FIGURE 4 graphically depicts the manner in which the overlays block objectionable material in different content segments. For ease of illustration, FIG. 4 depicts three successive content segments, designated as Segment 1, Segment 2 and Segment 3, respectively. Those skilled in the art can appreciate that the overlay creation process herein described can operate on any number of content segments to customize content by blocking objectionable material from appearing in such segments. In the illustrative embodiment depicted in FIG. 4, Segment 1, Segment 2 and Segment 3 each comprise three frames F₁, F₂ and F₃. Those skilled in the art should understand that an individual content segment could possess a greater or lesser number of frames.

For purposes of illustration, Segment 1, Segment 2 and Segment 3 of FIG. 4 include overlays O₁, O₂, and O₃, respectively, for blocking objectionable material appearing in at least a first frame F₁ of a corresponding segment. To the extent that objectionable material appears in the other frames F₂ and F₃ of a given segment, the overlay would appear in such frames as well. Note that the overlay in each segment will appear in only those frames containing objectionable subject matter. Thus, if a content segment contains no objectionable material, no overlay will appear.

As discussed previously, each overlay generated during process 300 of FIG. 3 appears at a given position (as established by the appearance of objectionable material in a given content segment) and has a particular size (height and width) and duration (Tₗₑₙ) in order to block the objectionable material in that content segment. In other words, the position, size and duration of the overlay in each content segment will depend on the position, size and duration, respectively, of the objectionable material in that segment. In the illustrative embodiment depicted in FIG. 4, the overlays O1, O2, and O3 appear at different positions and have different sizes, corresponding to the different positions and sizes, respectively, of the objectionable material in the content segments.

The foregoing describes a technique for customizing content, such as an audio visual program, a computer game or data, and more particularly, to block objectionable material in such content. While customization technique has been described above in terms of generating an overlay to block objectionable material in a content segment, the technique could easily apply to generate overlays to add information to a content segment. For example, an overlay could comprise a cover layer which when placed to overlie all or part of a frame or group of frames, could additional information to the frame(s), such as an advertisement , or a sub-title in a different language.

## Claims

1. A method for customizing a content bundle including a content file having at least one segment, and a rich media file which characterizes the at least one segment, comprising the steps of:
parsing the rich media file to identify a location within the at least one segment for an overlay; and
creating an overlay for insertion into the content segment at the identified location.

2. The method according to claim 1 wherein:
the parsing step further comprises the step of parsing the rich media file to identify the location in the at least one content segment of objectionable material and
the overlay creating step further comprises the step of inserting the overlay to into the content segment at the identified location to block the objectionable material.

3. The method according to claim 1 wherein the parsing step further includes the step of establishing the size and duration of the overlay.

4. The method according to claim 1 wherein the step of creating the overlay further comprises the step of creating a cover layer to overlie the content segment.

5. The method according to claim 1 wherein the step of creating the overlay further comprises the step of modifying at least one data element within the at least one content segment to block objectionable material.

6. A method for customizing a content bundle including a content file having at least one segment, and a rich media file which characterizes the at least one segment, comprising the steps of:
parsing the rich media file to identify locations within content segments for overlays; and
creating overlays for insertion into the content segments at identified locations.

7. The method according to claim 1 wherein the overlays in different segments have different sizes.

8. The method according to claim 6 wherein:
the parsing step further comprises the step of parsing the rich media file to identify locations in the content segments of objectionable material and
the overlay creating step further comprises the step of inserting overlays to into the content segment at the identified locations to block the objectionable material.

9. The method according to claim 6 wherein the parsing step further includes the step of establishing the size and duration of the overlay.

10. The method according to claim 6 wherein the step of creating the overlay further comprises the step of creating a cover layer to overlie the content segment.

11. The method according to claim 6 wherein the step of creating the overlay further comprises the step of modifying at least one data element within the at least one content segment to block objectionable material.

12. Apparatus for customizing a content bundle including a content file having at least one segment, and a rich media file which characterizes the at least one segment, comprising the steps of:
means parsing the rich media file to identify a location within the at least one segment for an overlay; and
means creating an overlay; and
means for inserting the overlay into the content segment at the identified location.

13. The apparatus according to claim 12 wherein:
the mans for parsing serves to parse the rich media file to identify the location in the at least one content segment of objectionable material and
the means for inserting the overlay serves to insert the overlay to into the content segment at the identified location to block the objectionable material.

14. The apparatus according to claim 12 wherein the parsing means establishes the size and duration of the overlay.

15. The apparatus according to claim 12 wherein overlay generated by the overlay generating means will overlie the content segment.

16. The apparatus according to claim 12 wherein the overlay generating means modifies at least one data element within the at least one content segment to block objectionable material.
